# FASCICULE DE BREVET EUROPEEN

(11) **EP 2 398 308 B1**
(45) Date de publication et mention de la délivrance du brevet: **15.07.2015**
(21) Numéro de dépôt: 10709884.0
(22) Date de dépôt: 18.02.2010
(51) Int. Cl.: A01G 9/02

(54) **MUR VÉGÉTALISÉ OU FAÇADE VÉGÉTALISÉE**
BEPFLANZTE WAND ODER BEPFLANZTE FASSADE
PLANTED WALL OR PLANTED FAÇADE

(30) Priorité: 20.02.2009 FR 0951102
(43) Date de publication de la demande: 28.12.2011
(73) Titulaire: Canevaflor, 69008 Lyon (FR)
(72) Inventeur: PELESZEZAK, Pascal, F-69003 Lyon (FR)
(74) Mandataire: Chevalier, Renaud Philippe
(86) Numéro de dépôt international: PCT/FR2010/050273
(87) Numéro de publication internationale: WO 2010/094890

(56) Documents cités:
- EP-A- 1 617 008
- FR-A- 2 872 381

## Description

La présente invention concerne un mur végétalisé ou une façade végétalisée, qui constitue une structure pouvant être installée, par exemple, en bordure de chaussée ou sur un pignon d'immeuble, dans un environnement urbain ou autre.

Une structure pour mur végétalisé est connue, par exemple, par le brevet français FR 2872381 ou son équivalent le brevet européen EP 1771062, au nom du Demandeur.

Les murs végétalisés ont actuellement une fonction essentiellement décorative, ou du moins un rôle passif, en particulier : embellissement urbain, dissimulation de murs disgracieux en pierre ou en béton, écran anti-bruit. Par les plantes qu'ils comportent, ces murs végétalisés ont aussi un rôle de dépollution vis-à-vis de l'atmosphère ambiante, notamment en milieu urbain ou en bordure de voies de circulation.

La présente invention a pour but de fournir un mur végétalisé ou une façade végétalisée perfectionné, pouvant jouer un rôle « actif » en plus de ses fonctions habituelles, en particulier du point de vue énergétique.

A cet effet, l'invention a pour objet un mur végétalisé ou une façade végétalisée, comportant des zones recevant des plantes ou aptes à recevoir des plantes, ce mur ou cette façade étant essentiellement caractérisé par le fait qu'il/elle comporte aussi des panneaux photovoltaïques, aptes à être rafraîchis par de l'air circulant au contact des plantes.

Ainsi, l'idée à la base de la présente invention consiste à mettre à profit le rafraîchissement de l'air, résultant du phénomène d'évapo-transpiration des feuillages des plantes du mur végétalisé, pour venir rafraîchir des panneaux photovoltaïques installés sur le même mur, afin d'optimiser le rendement de ces panneaux photovoltaïques et leur production d'électricité.

Il en est en effet connu que les panneaux photovoltaïques fonctionnent d'une façon optimale à une température modérée, alors que leur exposition au rayonnement solaire les amène à une température plus élevée, ce qui rend souhaitable un rafraîchissement de ces panneaux. En plaçant des panneaux photovoltaïques sur un mur végétalisé, on dispose d'un moyen de rafraîchissement « naturel » et non-consommateur d'énergie extérieure. Plus précisément, l'évapo-transpiration des feuillages crée une ventilation naturelle et un refroidissement des panneaux photovoltaïques par convection, sans apport d'énergie extérieure, et ceci dans des conditions idéales puisque :
- en hiver, les plantes n'ont pas de feuillage mais la température ambiante étant basse, le rafraîchissement des panneaux photovoltaïques n'est pas nécessaire ;
- en été, les plantes possèdent un feuillage grâce auquel l'effet de rafraîchissement est obtenu.

En particulier, dans des conditions estivales, les panneaux photovoltaïques peuvent ainsi être maintenus à la température ambiante, par exemple comprise entre 25 et 30° C, pour un fonctionnement optimal, alors que leur température habituelle (sous le rayonnement solaire) serait de l'ordre de 50 à 55 °C.

Compte tenu de l'épaisseur habituelle des feuillages, et pour guider le flux d'air rafraîchi entre la structure du mur ou de la façade et les panneaux photovoltaïques, ces panneaux sont avantageusement placés en saillie, c'est-à-dire en avant des zones recevant les plantes ou aptes à recevoir les plantes.

Une disposition alternée des plantes et des panneaux photovoltaïques, sur toute l'étendue du mur végétalisé ou de la façade végétalisée, apparaît particulièrement avantageuse. Dans ce but, les zones recevant les plantes ou aptes à recevoir les plantes, d'une part, et les panneaux photovoltaïques, d'autre part, peuvent être disposés de façon alternée notamment :
- en formant des bandes horizontales, ou
- en formant des bandes verticales, ou encore
- en formant un damier.

Avantageusement, les zones recevant les plantes ou aptes à recevoir les plantes, d'une part, et les panneaux photovoltaïques, d'autre part, représentent les unes et les autres respectivement environ 50 % de l'étendue totale du mur végétalisé ou de la façade végétalisée.

On notera que, grâce à la position avancée des panneaux photovoltaïques, et à leur disposition alternée avec les zones couvertes de plantes, ces panneaux créent sur les plantes une ombre portée qui contribue à leur rafraîchissement, donc au rafraîchissement de l'air qui circule au contact des plantes et vient lui-même rafraîchir les panneaux photovoltaïques.

Compte tenu de l'étendue des panneaux photovoltaïques, des éléments de protection thermique et/ou phonique sont de préférence prévus, en arrière des panneaux photovoltaïques. Ces éléments de protection assurent la continuité des propriétés d'isolation thermique et/ou phonique du mur végétalisé ou de la façade végétalisée, dans les parties situées entre les zones couvertes de plantes. Ainsi, l'ajout des panneaux photovoltaïques n'altère pas les qualités d'isolation thermique et phonique du mur ou de la façade selon l'invention.

Ces panneaux photovoltaïques peuvent être installés verticalement sur le mur végétalisé ou la façade végétalisée, ou être installés en position inclinée ce qui est avantageux du double point de vue de la captation du rayonnement solaire par ces panneaux et de la formation de l'ombre portée de ces panneaux sur les zones couvertes de plantes. Un montage desdits panneaux photovoltaïques avec possibilité d'orientation mécanique de ces panneaux est aussi envisageable

Le mur végétalisé ou la façade végétalisée, objet de l'invention, peut fonctionner avec une ventilation entièrement naturelle, toute l'énergie électrique fournie par les panneaux photovoltaïques pouvant dans ce cas être utilisée en dehors du mur ou de la façade.

Toutefois, dans une variante de ce mur végétalisé ou de cette façade végétalisée, celui-ci ou celle-ci comprend des moyens motorisés de mise en circulation forcée de l'air au contact des plantes et des panneaux photovoltaïques, ces moyens étant alimentés en énergie électrique à partir des panneaux photovoltaïques eux-mêmes. On crée ainsi une circulation forcée de l'air qui certes nécessite de l'énergie, mais qui reste très bénéficiaire du point de vue du bilan énergique, si l'on considère que :
- l'énergie électrique utilisée pour l'entraînement des moyens de mise en circulation forcée de l'air est produite par les panneaux photovoltaïques eux-mêmes, et non pas apportée depuis une source extérieure ;
- le refroidissement amélioré des panneaux photovoltaïques, qui est le résultat de la circulation forcée de l'air, induit une amélioration du rendement de ces panneaux qui compense largement la quantité d'énergie prélevée pour obtenir cette circulation forcée.

Ainsi, dans tous les cas, le mur végétalisé ou la façade végétalisée, équipé de panneaux photovoltaïques, pourra fournir de l'énergie à l'extérieur. Plus le mur ou la façade sera étendu, plus la surface des panneaux photovoltaïques sera elle-même proportionnellement étendue, et plus la puissance électrique fournie pourra donc être élevée.

Si on le souhaite, une partie de cette puissance électrique pourra aussi être utilisée, sur le mur végétalisé ou la façade végétalisée, par exemple pour alimenter à partir des panneaux photovoltaïques un système d'éclairage qui réalise une mise en valeur de ce mur ou de cette façade. D'une manière analogue, les panneaux photovoltaïques peuvent alimenter en énergie économiquement un système autonome équipant le mur végétalisé ou la façade végétalisée, tel qu'un système d'irrigation ou de brumisation des zones couvertes de plantes, ou encore un système de nettoyage, notamment de lavage des panneaux photovoltaïques.

L'invention sera mieux comprise à l'aide de la description qui suit, en référence au dessin schématique annexé représentant, à titre d'exemples, quelques formes d'exécution de ce mur végétalisé ou de cette façade végétalisée.
Figure 1 est une vue de face d'un mur végétalisé avec panneaux photovoltaïques, conforme à la présente invention ;
Figure 2 est une vue en plan par dessus du mur végétalisé de la figure 1 ;
Figure 3 est une vue en plan par-dessus similaire à la figure 2, se rapportant à une première variante ;
Figure 4 est une vue de face d'un mur végétalisé selon une autre variante ;
Figure 5 est une vue en plan par-dessus de cette autre variante.

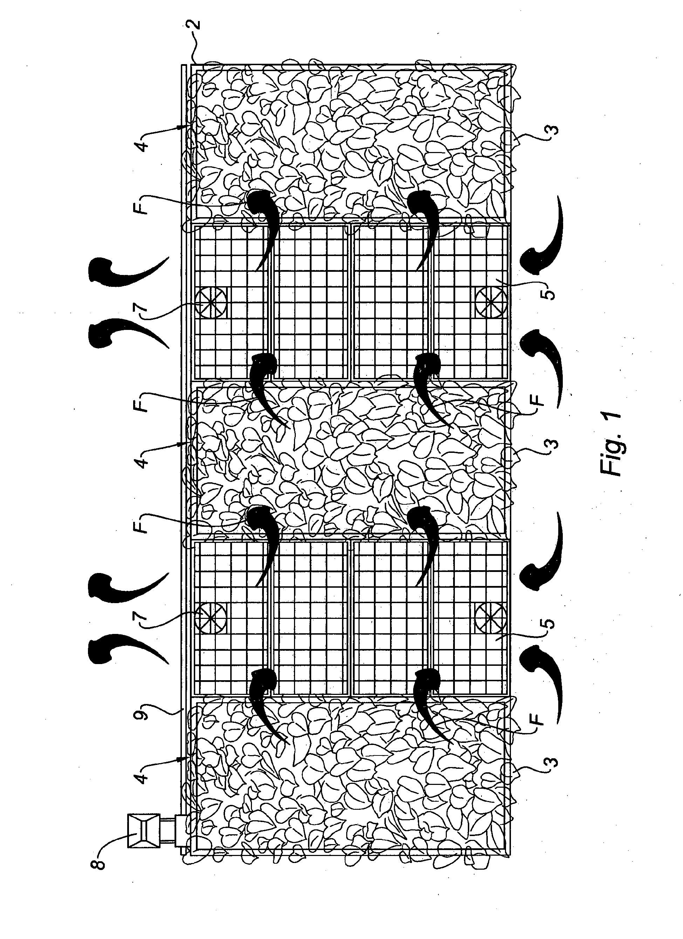

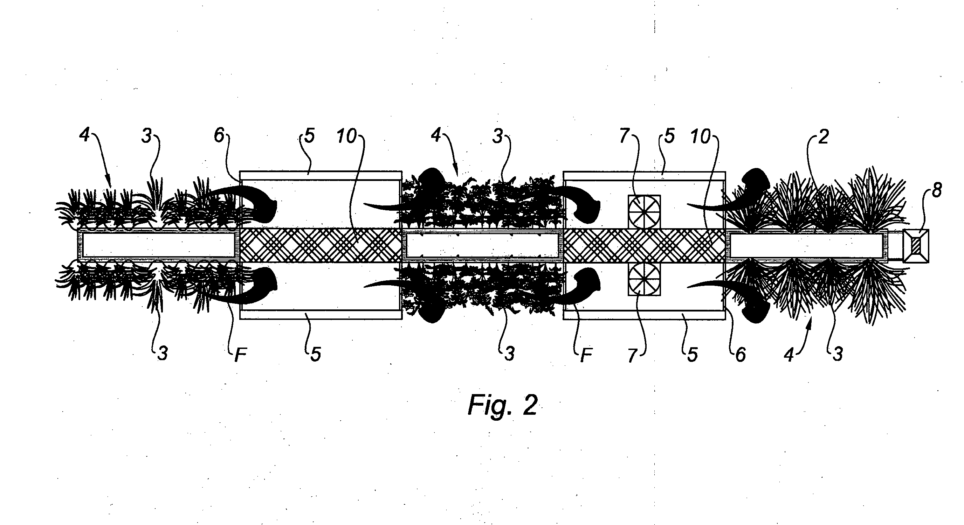

Les figures 1 et 2 montrent un mur végétalisé, lequel comporte une ossature centrale 2, s'étendant dans un plan vertical, de part et d'autre de laquelle se développent plantes 3.

Plus particulièrement, les zones 4 qui reçoivent ici les plantes 3 s'étendent suivant des bandes verticales, séparées les unes des autres par des intervalles dont largeur est sensiblement égale à celles de ces zones 4.

Entre les zones 4 ou bandes couvertes de plantes 3, s'étendent d'autres bandes verticales dans lesquelles sont disposés, sur les deux faces du mur, des panneaux photovoltaïques 5 maintenus sur l'ossature centrale 2 par des supports ou consoles 6.

Ces supports ou consoles 6 positionnent les panneaux photovoltaïques 5 en avant de l'ossature centrale 2 et des zones 4, l'avancée des panneaux 5 correspondant sensiblement à l'épaisseur des feuillages des plantes 3 plantées dans les zones 4 - voir figure 2.

Les panneaux photovoltaïques 5 sont représentés verticaux, dans un souci de simplicité, mais ils peuvent avantageusement être aussi inclinés soit de manière constante, soit avec possibilité d'orientation mécanique.

En fonctionnement, un flux d'air symbolisé par les flèches F circule sensiblement dans le plan vertical du mur végétal, l'air se rafraîchissant au contact des feuillages des plantes 3, par suite de l'effet d'évapo-transpiration, et cet air venant ensuite lécher et rafraîchir les panneaux photovoltaïques 5. Ainsi, les panneaux photovoltaïques 5 fonctionnent dans des conditions optimales, en ce qui concerne leur rendement énergétique.

L'énergie électrique produite par les panneaux photovoltaïques 5 est utilisable à distance du mur végétal, mais elle peut aussi alimenter certains équipements utiles de ce mur, comme décrit ci-après.

En premier lieu, des groupes moto-ventilateurs électriques 7 peuvent êtres montés sur l'ossature 2 du mur végétalisé, pour accélérer le flux d'air en créant une certaine circulation forcée. Les moteurs électriques des groupes moto-ventilateurs 7 sont alimentés par les panneaux photovoltaïques 5, en ne consommant qu'une fraction limitée de la puissance électrique générée par ces panneaux 5.

L'ossature 2 peut aussi porter, par exemple dans sa partie haute, un système d'éclairage symbolisé par une lampe 8, pour l'éclairage nocturne et la mise en valeur du mur végétalisé. Ce système d'éclairage est aussi alimenté en énergie électrique à partir des panneaux photovoltaïques 5 eux-mêmes.

Un système de brumisation, symbolisé ici par un tuyau de brumisation 9, peut être porté par la partie haute de l'ossature 2, pour réaliser un rafraîchissement complémentaire et éventuellement un lavage des panneaux photovoltaïques 5 par nébulisation d'eau. La pompe faisant circuler cette eau, ainsi que les organes de commande et régulation du système de brumisation 9, peuvent ici aussi être alimentés en énergie électrique à partir des panneaux photovoltaïques 5.

Dans le cas de panneaux photovoltaïques 5 orientables mécaniquement, l'énergie électrique produite par ces panneaux peut être utilisée pour alimenter le mécanisme d'orientation de ces panneaux eux-mêmes.

De plus, dans un souci de sécurité et de pérennité, et pour pouvoir alimenter électriquement à tout moment les équipements du mur végétalisé, on peut envisager soit un stockage de l'énergie électrique produite par les panneau x photovoltaïques 5, soit une alimentation électrique extérieure, par un réseau de distribution électrique classique.

De préférence, des éléments 10 de protection thermique et/ou phonique, en forme de plaques de matières et d'épaisseur appropriées, sont placés en arrière des différents panneaux photovoltaïques 5. Ces éléments 10 assurent la continuité des propriétés d'isolation thermique et/ou phonique du mur végétalisé, dans les bandes situées entre les zones 4 couvertes de plantes 3.

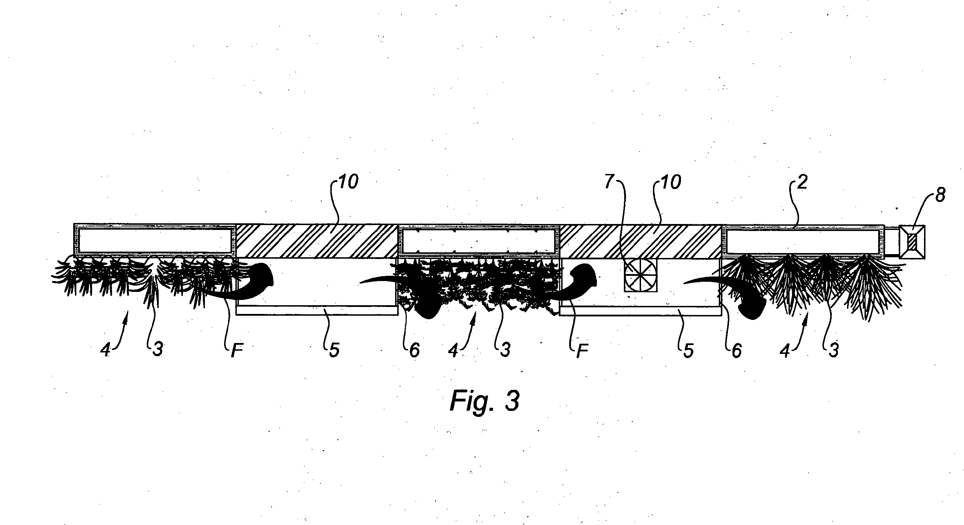

La figure 3, sur laquelle les parties correspondantes sont désignées par les mêmes références numériques, illustre une variante de mur végétalisé ou de façade végétalisée selon l'invention, dans laquelle les plantes 3 et les panneaux photovoltaïques 5 ne sont prévus que sur une seule face de l'ossature 2, des éléments 10 de protection thermique et/ou phonique étant, ici encore, disposés entre les zones 4 couvertes de plantes 3, en arrière des panneaux photovoltaïques 5.

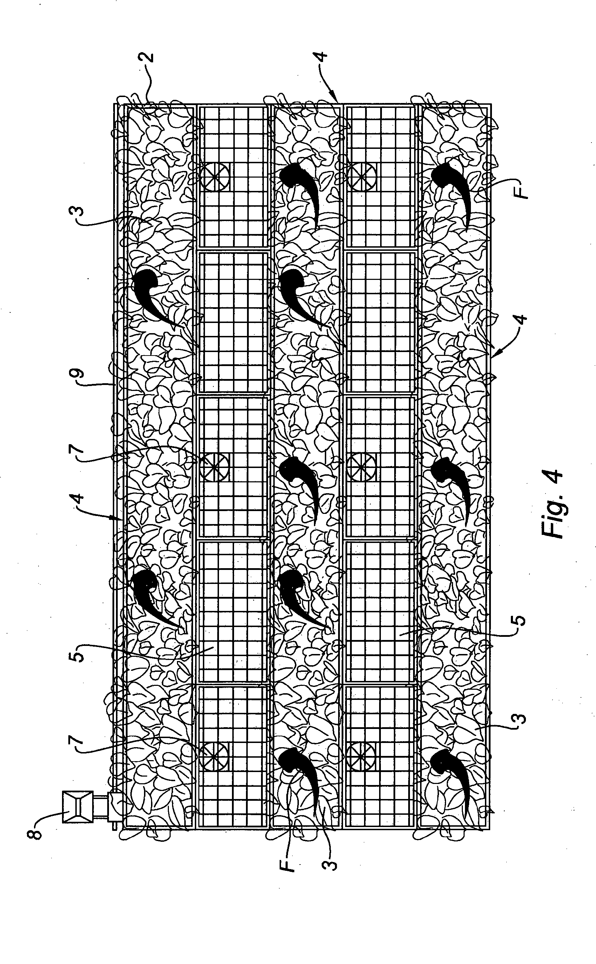

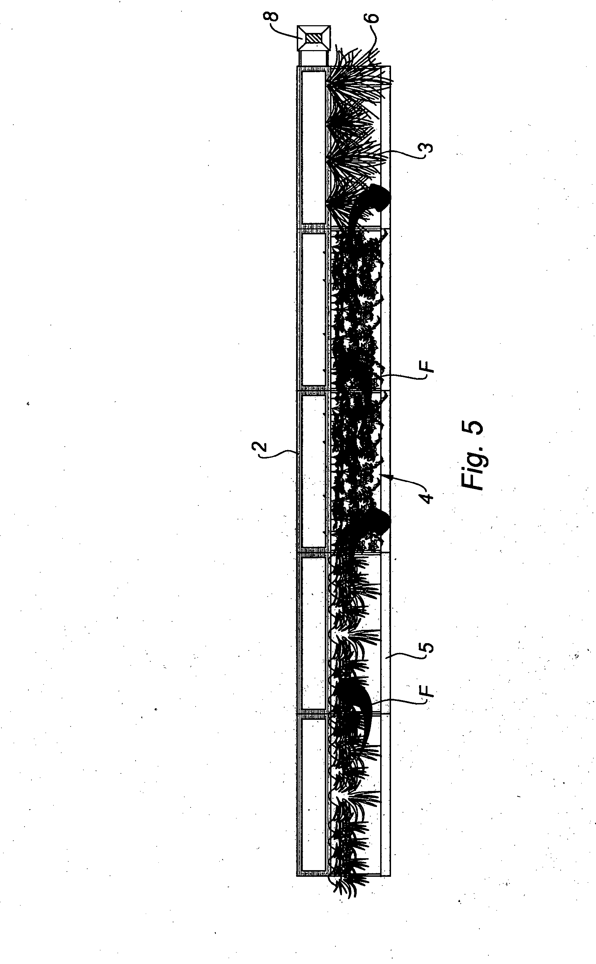

Enfin, les figures 4 et 5 illustrent une autre variante, dans laquelle les zones 4 couvertes de plantes 3 et les panneaux photovoltaïques 5 sont disposés non pas suivant des bandes verticales, mais suivant des bandes horizontales, toujours avec alternance de ces bandes.

On ne s'éloignerait pas du cadre de l'invention, telle que définie dans les revendications annexées :
- en disposant les zones couvertes de plantes et les panneaux photovoltaïques en damier, c'est-à-dire avec une alternance tant verticale qu'horizontale ;
- en alimentant tous équipements annexes à l'aide des panneaux photovoltaïques du mur végétalisé ou de la façade végétalisée.

## Revendications

1. Mur végétalisé ou façade végétalisée, comportant des zones (4) recevant des plantes (3) ou aptes à recevoir des plantes, **caractérisé en ce que** le mur ou la façade comporte aussi des panneaux photovoltaïques (5), aptes à être rafraîchis par de l'air circulant au contact des plantes (3).

2. Mur végétalisé ou façade végétalisée selon la revendication 1, **caractérisé en ce que** les panneaux photovoltaïques (5) sont placés en saillie, en avant des zones (4) recevant les plantes (3) ou aptes à recevoir les plantes.

3. Mur végétalisé ou façade végétalisée selon la revendication 1 ou 2, **caractérisé en ce que** les zones (4) recevant les plantes (3) ou aptes à recevoir les plantes, d'une part, et les panneaux photovoltaïques (5), d'autre part, sont disposés de façon alternée, en formant des bandes horizontales ou verticales.

4. Mur végétalisé ou façade végétalisée selon la revendication 1 ou 2, **caractérisé en ce que** les zones (4) recevant les plantes (3) ou aptes à recevoir les plantes, d'une part, et les panneaux photovoltaïques (5), d'autre part, sont disposés de façon alternée, en formant un damier.

5. Mur végétalisé ou façade végétalisée selon l'une des revendications 1 à 4, **caractérisé en ce que** les zones (4) recevant les plantes (3) ou aptes à recevoir les plantes, d'une part, et les panneaux photovoltaïques (5), d'autre part, représentent les unes et les autres respectivement environ 50 % de l'étendue totale du mur végétalisé ou de la façade végétalisée.

6. Mur végétalisé ou façade végétalisée selon l'une des revendications 1 à 5, **caractérisé en ce que** des éléments de protection thermique et/ou phonique (10) sont prévus, en arrière des panneaux photovoltaïques (5).

7. Mur végétalisé ou façade végétalisée selon l'une des revendications 1 à 6, **caractérisé en ce qu'**il comprend des moyens motorisés (7) de mise en circulation forcée de l'air au contact des plantes (3) et des panneaux photovoltaïques (5), ces moyens (7) étant alimentés en énergie électrique à partir des panneaux photovoltaïques (5) eux-mêmes.

8. Mur végétalisé ou façade végétalisée selon l'une des revendications 1 à 7, **caractérisé en ce que** l'énergie électrique produite par les panneaux photovoltaïques (5) du mur ou de la façade est utilisée pour alimenter un système d'éclairage (8) de ce mur ou de cette façade, et/ou un système d'irrigation ou de brumisation (9) des zones (4) couvertes de plantes (3), et/ou un système de nettoyage, notamment de lavage, des panneaux photovoltaïques (5).

## Patentansprüche

1. Bepflanzte Wand oder bepflanzte Fassade, umfassend Bereiche (4), die Pflanzen (3) aufnehmen oder ausgelegt sind, um Pflanzen aufzunehmen, **dadurch gekennzeichnet, dass** die Wand oder die Fassade auch Photovoltaikplatten (5) umfasst, die ausgelegt sind, um von der Luft, die in Kontakt mit den Pflanzen (3) zirkuliert, abgekühlt zu werden.

2. Bepflanzte Wand oder bepflanzte Fassade nach Anspruch 1, **dadurch gekennzeichnet, dass** die Photovoltaikplatten (5) vorspringend angeordnet sind, vor Bereichen (4), die die Pflanzen (3) aufnehmen oder ausgelegt sind, um die Pflanzen aufzunehmen.

3. Bepflanzte Wand oder bepflanzte Fassade nach Anspruch 1 oder 2, **dadurch gekennzeichnet, dass** die Bereiche (4), die die Pflanzen (3) aufnehmen oder ausgelegt sind, um die Pflanzen aufzunehmen, einerseits, und die Photovoltaikplatten (5) andererseits auf alternierende Weise angeordnet sind, indem sie horizontale oder vertikale Bänder bilden.

4. Bepflanzte Wand oder bepflanzte Fassade nach Anspruch 1 oder 2, **dadurch gekennzeichnet, dass** die Bereiche (4), die die Pflanzen (3) aufnehmen oder ausgelegt sind, um die Pflanzen aufzunehmen, einerseits und die Photovoltaikplatten (5) andererseits auf alternierende Wese angeordnet sind, indem sie ein Damebrett bilden.

5. Bepflanzte Wand oder bepflanzte Fassade nach einem der Ansprüche 1 bis 4, **dadurch gekennzeichnet, dass** die Bereiche (4), die die Pflanzen (3) aufnehmen oder ausgelegt sind, um die Pflanzen aufzunehmen, einerseits und die Photovoltaikplatten (5) andererseits beide jeweils ungefähr 50 % der gesamten Ausdehnung der bepflanzten Wand oder der bepflanzten Fassade darstellen.

6. Bepflanzte Wand oder bepflanzte Fassade nach einem der Ansprüche 1 bis 5, **dadurch gekennzeichnet, dass** thermische und/oder akustische Schutzelemente (10) hinter den Photovoltaikplatten (5) vorgesehen sind.

7. Bepflanzte Wand oder bepflanzte Fassade nach einem der Ansprüche 1 bis 6, **dadurch gekennzeichnet, dass** sie motorgetriebene Mittel (7) zum Versetzen in Zwangsumlauf der Luft in Kontakt mit den Pflanzen (3) und den Photovoltaikplatten (5) umfasst, wobei diese Mittel (7) mit elektrischer Energie von den Photovoltaikplatten (5) selbst versorgt werden.

8. Bepflanzte Wand oder bepflanzte Fassade nach einem der Ansprüche 1 bis 7, **dadurch gekennzeichnet, dass** die elektrische Energie, die von den Photovoltaikplatten (5) der Wand oder der Fassade erzeugt wird, verwendet wird, um ein System zur Beleuchtung (8) dieser Wand oder dieser Fassade und/oder ein System zur Bewässerung oder Benebelung (9) der Bereiche (4), die mit Pflanzen (3) bedeckt sind, und/oder ein System zur Reinigung, insbesondere zum Abwaschen, der Photovoltaikplatten (5) zu versorgen.

## Claims

1. A vegetated wall or vegetated frontage, including areas (4) receiving plants (3) or suitable for receiving plants, **characterized in that** the wall or the frontage includes photovoltaic panels (5) capable of being cooled by air circulating in contact with the plants (3).

2. The vegetated wall or the vegetated frontage according to claim 1, **characterized in that** the photovoltaic panels (5) are placed so as to protrude, in front of the areas (4) receiving the plants (3) or suitable for receiving the plants.

3. The vegetated wall or the vegetated frontage according to claim 1 or 2, **characterized in that** the areas (4) receiving the plants (3), on one hand, or suitable for receiving the plants and the photovoltaic panels (5), on the other hand, are arranged alternately, while forming horizontal or vertical bands.

4. The vegetated wall or the vegetated frontage according to claim 1 or 2, **characterized in that** the areas (4) receiving the plants (3) or suitable for receiving the plants, on one hand, and the photovoltaic panels are arranged alternately while forming a checkerboard.

5. The vegetated wall or the vegetated frontage according to claim 1 to 4, **characterized in that** the areas (4) receiving the plants (3) or suitable for receiving the plants and the photovoltaic panels (5) represent each other respectively about 50% of a total extension of the vegetated wall or the vegetated frontage.

6. The vegetated wall or the vegetated frontage according to claim 1 to 5, **characterized in that** thermal and/or phonic protective elements (10) are provided at a rear of the photovoltaic panels (5).

7. The vegetated wall or the vegetated frontage according to claim 1 to 6, **characterized in that** it comprises motorized means (7) for forced circulation of the air in contact with the plants (3) and photovoltaic panels (5), these means (7) being supplied with electric energy from the actual photovoltaic panels (5).

8. The vegetated wall or the vegetated frontage according to claim 1 to 7, **characterized in that** electric energy produced by the photovoltaic panels (5) of the wall or of the frontage is used for powering an illumination system (8) of this wall or of this frontage, and/or an irrigation or mist propagation system (9) for the areas (4) covered with plants (3), and/or a cleaning system, notably a washing system for the photovoltaic panels (5).
